# FASCICULE DE BREVET EUROPEEN

(11) **EP 3 467 630 B1**
(45) Date de publication et mention de la délivrance du brevet: **27.11.2019**
(21) Numéro de dépôt: 18197652.3
(22) Date de dépôt: 28.09.2018
(51) Int. Cl.: G06F 3/048

(54) **DISPOSITIF D'EXTENSION DE PORTS POUR UN AÉRONEF**
VORRICHTUNG ZUR PORTERWEITERUNG FÜR EIN LUFTFAHRZEUG
PORT EXTENSION DEVICE FOR AN AIRCRAFT

(30) Priorité: 04.10.2017 FR 1759303
(43) Date de publication de la demande: 10.04.2019
(73) Titulaire: Airbus Operations S.A.S., 31060 Toulouse (FR)
(72) Inventeur: LA TORRE COSTA, Pau, 31400 Toulouse (FR)
(74) Mandataire: Sarraméa, Claude

(56) Documents cités:
- CN-A- 104 683 322
- US-A1- 2012 271 616

## Description

### DOMAINE TECHNIQUE

La présente invention concerne un dispositif d'extension de ports destiné à être connecté à un terminal d'interface utilisateur dans un aéronef, ainsi que des aéronefs comportant de tels dispositifs d'extension de ports. La présente invention concerne un procédé implémenté par un tel dispositif d'extension de ports, ainsi qu'un produit programme d'ordinateur adapté pour implémenter ce procédé et un support de stockage d'informations sur lequel est stocké un tel programme d'ordinateur.

### ETAT DE LA TECHNIQUE ANTERIEURE

Dans les aéronefs, des terminaux d'interface utilisateur, appelés MCDU (pour « Multipurpose Control and Display Unit » en langue anglo-saxonne), permettent à un utilisateur (pilote, copilote) de contrôler divers systèmes, appelés ici systèmes périphériques, de l'aéronef. Ces terminaux d'interface utilisateur servent ainsi de plateforme commune d'interaction avec l'utilisateur pour contrôler ces systèmes périphériques.

Ces terminaux d'interface utilisateur comportent respectivement un écran, sur lequel sont affichés, via une page de sélection, les noms des systèmes périphériques branchés auxdits terminaux d'interface utilisateur. Lorsque l'utilisateur sélectionne un système périphérique via cette page de sélection, le terminal d'interface utilisateur en question passe la main au système périphérique sélectionné. Les contrôles effectués sur ledit terminal d'interface utilisateur sont alors transférés au système périphérique sélectionné pour traitement, et l'interface graphique affichée sur l'écran est générée par ledit système périphérique sélectionné.

Une difficulté rencontrée avec ces terminaux d'interface utilisateur est qu'ils comportent un nombre limité de ports permettant d'y brancher des systèmes périphériques. Il est souhaitable de pallier cet inconvénient de l'état de la technique. Il est notamment souhaitable de fournir une solution permettant d'étendre le nombre de ports de ces terminaux d'interface utilisateur, sans avoir à les remplacer par des terminaux d'interface utilisateur disposant d'un plus grand nombre de ports. Il est aussi souhaitable de fournir une solution qui permette d'étendre le nombre de ports de ces terminaux d'interface utilisateur, de manière transparente pour ledit terminal d'interface utilisateur, pour lesdits systèmes périphériques et pour l'utilisateur.

Le document CN 104 683 322A divulgue un procédé d'activation d'une fonction ACARS (Aircraft Communication Addressing And Reporting System) d'une unité de communication CMU (Communications Management Unit) de type Collins CMU-4000 au moyen d'un simulateur d'une interface homme-machine de type MCDU (Multifunction Control Display Unit) reliée à l'unité de communication CMU. Le document divulgue en particulier la liaison entre l'unité de communication CMU et l'interface homme-machine de type MCDU.

Le document US 2012/271616 A1 divulgue un émulateur de plate-forme informatique destiné à être utilisé sur un véhicule. Cet émulateur comprend un écran, un processeur couplé en communication avec l'écran, une interface de saisie de données couplée en communication avec le processeur, et au moins une interface électronique pour interfacer un système hôte du véhicule avec le processeur.

### EXPOSE DE L'INVENTION

Un objet de la présente invention est de proposer un dispositif d'extension de ports destiné à être connecté à un terminal d'interface utilisateur dans un aéronef, le terminal d'interface utilisateur étant destiné à lui connecter directement des systèmes périphériques et à afficher sur un écran dudit terminal d'interface utilisateur une page de sélection adaptée pour permettre à un utilisateur de sélectionner un système périphérique parmi lesdits systèmes périphériques de sorte à transférer un contrôle d'interface graphique au système périphérique sélectionné. D'autres systèmes périphériques étant connectés au terminal d'interface utilisateur via une circuiterie de contrôle du dispositif d'extension de ports, le dispositif d'extension de ports est tel que la circuiterie de contrôle est adaptée pour émuler un comportement de système périphérique et implémente : des moyens pour répondre, à une demande de nommage émanant du terminal d'interface utilisateur, par un nommage représentatif d'une action de navigation de menu du terminal d'interface utilisateur ; lorsque le terminal d'interface utilisateur effectue un transfert de contrôle d'interface graphique dudit terminal d'interface utilisateur à ladite circuiterie de contrôle, des moyens pour émuler une autre page de sélection, au style de la page de sélection générée par le terminal d'interface utilisateur, adaptée pour permettre à l'utilisateur de sélectionner un système périphérique parmi d'autres systèmes périphériques connectés à ladite circuiterie de contrôle ; et lorsque ladite circuiterie de contrôle détecte une sélection d'un système périphérique parmi lesdits autres systèmes périphériques grâce au transfert de contrôle d'interface graphique, des moyens pour effectuer un transfert de contrôle d'interface graphique dudit terminal d'interface utilisateur audit système périphérique sélectionné, la circuiterie de contrôle agissant comme un relais entre ledit système périphérique sélectionné et le terminal d'interface utilisateur.

Ainsi, le nombre de ports existant sur le terminal d'interface utilisateur est étendu grâce au dispositif d'extension de ports, et ce, de manière transparente pour ledit terminal d'interface utilisateur, puisque la circuiterie de contrôle émule un comportement de système périphérique. De plus, comme la circuiterie de contrôle émule une autre page de sélection au style de la page de sélection générée par le terminal d'interface utilisateur, l'extension de ports est transparente pour l'utilisateur. Enfin, comme la circuiterie de contrôle agit comme un relais entre les systèmes périphériques qui lui sont branchés et le terminal d'interface utilisateur, l'extension de ports est aussi transparente pour les systèmes périphériques pour lesquels la circuiterie de contrôle agit comme un relais.

Selon un mode de réalisation particulier, le dispositif d'extension de ports comporte un connecteur destiné à brancher le dispositif d'extension de ports au terminal d'interface utilisateur et un câblage destiné à brancher lesdits autres systèmes périphériques, et la circuiterie de contrôle est incluse dans un boîtier reliant ledit connecteur et ledit câblage.

Selon un mode de réalisation particulier, le dispositif d'extension de ports comporte un autre câblage destiné à brancher les systèmes périphériques à connecter directement audit terminal d'interface utilisateur, et ledit autre câblage est branché directement sur ledit connecteur.

Selon un mode de réalisation particulier, le connecteur est un connecteur femelle conforme au standard ARINC-739.

Selon un mode de réalisation particulier, ladite autre page de sélection comporte un élément réservé à un retour à la page de sélection générée par le terminal d'interface utilisateur, et lorsque ledit élément est sélectionné par l'utilisateur, la circuiterie de contrôle implémente des moyens pour effectuer un re-transfert de contrôle d'interface graphique vers ledit terminal d'interface utilisateur.

Selon un mode de réalisation particulier, pour définir ladite autre page de sélection, la circuiterie de contrôle implémente des moyens pour récupérer un nommage de chaque système périphérique qui lui est connecté en envoyant une demande de nommage à chaque dit système périphérique.

Un autre objet de la présente invention est de proposer un système de contrôle de systèmes périphériques, incluant un terminal d'interface utilisateur, des systèmes périphériques et un dispositif d'extension de ports tel qu'évoqué ci-dessus, un sous-ensemble des systèmes périphériques étant directement connecté au terminal d'interface utilisateur et un autre sous-ensemble des systèmes périphériques étant connecté au terminal d'interface utilisateur par le biais de la circuiterie de contrôle du dispositif d'extension de ports.

Un autre objet de la présente invention est de proposer un aéronef comportant un système de contrôle tel qu'évoqué ci-dessus.

Un autre objet de la présente invention est de proposer un procédé implémenté par une circuiterie de contrôle d'un dispositif d'extension de ports connecté à un terminal d'interface utilisateur dans un aéronef, le terminal d'interface utilisateur étant adapté à lui connecter directement des systèmes périphériques et à afficher sur un écran dudit terminal d'interface utilisateur une page de sélection adaptée pour permettre à un utilisateur de sélectionner un système périphérique parmi lesdits systèmes périphériques de sorte à transférer un contrôle d'interface graphique au système périphérique sélectionné. D'autres systèmes périphériques étant connectés au terminal d'interface utilisateur via la circuiterie de contrôle, le procédé est tel que la circuiterie de contrôle émule un comportement de système périphérique et implémente les étapes suivantes : répondre, à une demande de nommage émanant du terminal d'interface utilisateur, par un nommage représentatif d'une action de navigation de menu du terminal d'interface utilisateur ; lorsque le terminal d'interface utilisateur effectue un transfert de contrôle d'interface graphique dudit terminal d'interface utilisateur à ladite circuiterie de contrôle, émuler une autre page de sélection, au style de la page de sélection générée par le terminal d'interface utilisateur, adaptée pour permettre à l'utilisateur de sélectionner un système périphérique parmi d'autres systèmes périphériques connectés à ladite circuiterie de contrôle ; et lorsque ladite circuiterie de contrôle détecte une sélection d'un système périphérique parmi lesdits autres systèmes périphériques grâce au transfert de contrôle d'interface graphique, effectuer un transfert de contrôle d'interface graphique dudit terminal d'interface utilisateur audit système périphérique sélectionné, la circuiterie de contrôle agissant comme un relais entre ledit système périphérique sélectionné et le terminal d'interface utilisateur.

Un autre objet de la présente invention est de proposer un produit programme d'ordinateur, qui peut être stocké sur un support et/ou téléchargé d'un réseau de communication, afin d'être lu par un processeur du dispositif d'extension de ports évoqué ci-dessus. Ce programme d'ordinateur comprend des instructions pour implémenter le procédé mentionné ci-dessus, lorsque ledit programme est exécuté par le processeur. Un autre objet de la présente invention est de proposer un support de stockage d'informations sur lequel est stocké un tel programme d'ordinateur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 montre une vue de dessus d'un aéronef dans lequel est installé un ensemble composé d'un terminal d'interface utilisateur et d'un dispositif d'extension de ports ;
- la Fig. 2A illustre schématiquement le terminal d'interface utilisateur selon un premier agencement, et la Fig. 2B illustre schématiquement le terminal d'interface utilisateur selon un second agencement ;
- la Fig. 3 illustre schématiquement un exemple d'architecture matérielle d'une unité de contrôle du terminal d'interface utilisateur ;
- la Fig. 4A illustre schématiquement un premier exemple d'affichage obtenu sur un écran du terminal d'interface utilisateur, et la Fig. 4B illustre schématiquement un second exemple d'affichage obtenu sur l'écran du terminal d'interface utilisateur ;
- la Fig. 5 illustre schématiquement un dispositif d'extension de ports destiné à être connecté au terminal d'interface utilisateur ;
- la Fig. 6 illustre schématiquement un exemple d'architecture matérielle d'une circuiterie de contrôle incluse dans le dispositif d'extension de ports ;
- la Fig. 7 illustre schématiquement un algorithme d'affichage d'une page d'interface graphique par le terminal d'interface utilisateur, permettant d'obtenir le premier exemple d'affichage de la Fig. 4A ;
- la Fig. 8 illustre schématiquement un algorithme de réponse par la circuiterie de contrôle incluse dans le dispositif d'extension de ports à une demande du terminal d'interface utilisateur, afin de permettre d'obtenir le premier exemple d'affichage de la Fig. 4A ;
- la Fig. 9 illustre schématiquement un algorithme de gestion d'affichage par le terminal d'interface utilisateur, permettant d'obtenir le second exemple d'affichage de la Fig. 4B ; et
- la Fig. 10 illustre schématiquement un algorithme de gestion d'affichage par la circuiterie de contrôle incluse dans le dispositif d'extension de ports, afin de permettre d'obtenir le second exemple d'affichage de la Fig. 4B.

### EXPOSE DETAILLE DE MODES DE REALISATION

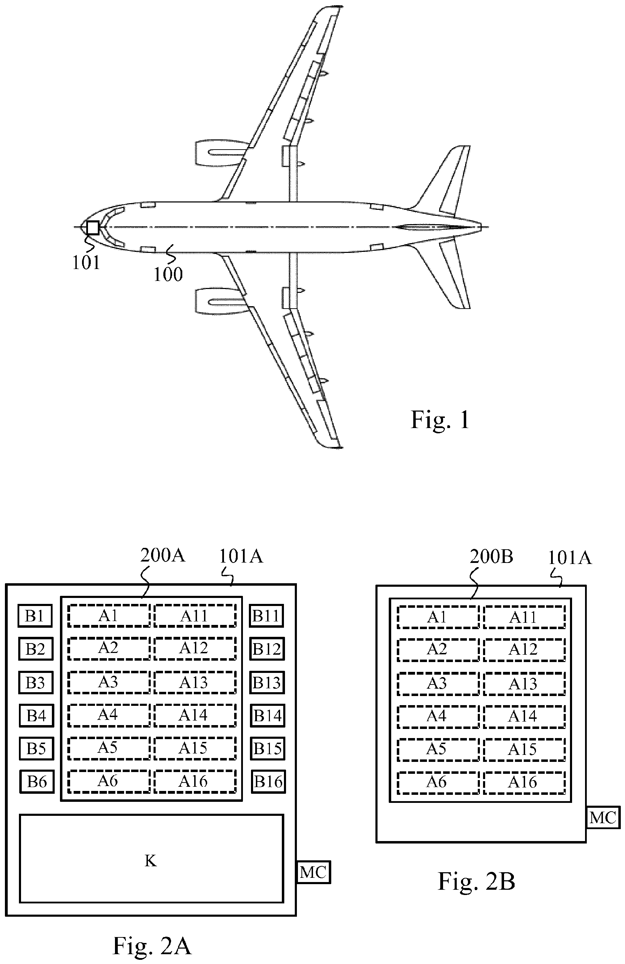

La **Fig. 1** montre, en vue de dessus, un aéronef 100. L'aéronef 100 est muni d'un ensemble d'équipements informatiques destiné à fournir une assistance au pilote de l'aéronef 100. Plus généralement, cet ensemble d'équipements informatiques est destiné à permettre l'exploitation de l'aéronef 100. Cet ensemble d'équipements informatiques comporte un système de contrôle 101 composé d'un terminal d'interface utilisateur 101A et d'un dispositif d'extension de ports 101B, tel que décrit ci-après, ainsi qu'une pluralité de systèmes périphériques (aussi appelés sous-systèmes) dont au moins un sous-ensemble est connecté audit terminal d'interface utilisateur 101A par le biais du dispositif d'extension de ports 101B. Le dispositif d'extension de ports 101B réalise ainsi un câblage qui permet de brancher lesdits systèmes périphériques audit terminal d'interface utilisateur 101A.

Dans un mode de réalisation particulier, le terminal d'interface utilisateur 101A est de type MCDU, préférentiellement conforme au standard ARINC-739. Le terminal d'interface utilisateur 101A peut être une variante de MCDU, appelée KCCU (pour « Keyboard Cursor Control Unit » en langue anglo-saxonne).

Le terminal d'interface utilisateur 101A dispose d'un nombre limité de ports pour brancher directement des systèmes périphériques, et le dispositif d'extension de ports 101B est adapté pour étendre ce nombre de ports afin de permettre de connecter un plus grand nombre de systèmes périphériques, et ce, de manière transparente pour le terminal d'interface utilisateur 101A.

La **Fig. 2A** illustre schématiquement le terminal d'interface utilisateur 101A selon un premier agencement. Sur la Fig. 2A, le terminal d'interface utilisateur 101A comporte un écran 200A, un ensemble de douze boutons B1 à B6 et B11 à B16 en bordure de l'écran 200A et un clavier K (pour « Keyboard » en langue anglo-saxonne). Le terminal d'interface utilisateur 101A comporte en outre un connecteur mâle MC (pour « Male Connector » en langue anglo-saxonne) destiné à connecter le dispositif d'extension de ports 101B. Préférentiellement, le connecteur mâle MC est conforme à la norme ARINC-739 et répond donc aux exigences du standard d'équipement militaire MS 24264R. En variante, le terminal d'interface utilisateur 101A peut être équipé d'un connecteur femelle en remplacement du connecteur mâle MC (ce qui implique que le dispositif d'extension de ports 101B est alors équipé d'un connecteur mâle correspondant).

Le terminal d'interface utilisateur 101A est adapté pour afficher sur l'écran 202A des pages d'interface graphique GUI (pour « Graphical User Interface » en langue anglo-saxonne). Les pages d'interface graphique GUI affichées sont générées par le terminal d'interface utilisateur 101A, et lorsqu'un utilisateur a sélectionné un système périphérique via une page de sélection, les pages d'interface graphique GUI affichées sont générées par ledit système périphérique sélectionné jusqu'à ce que ledit système périphérique sélectionné repasse la main au terminal d'interface utilisateur 101A. En d'autres termes, une fois qu'un système périphérique est sélectionné via la page de sélection, un transfert de contrôle d'interface utilisateur s'opère : les commandes opérées par l'utilisateur sur le clavier K et sur les boutons B1 à B6 et B11 à B16 sont transférées par le terminal d'interface utilisateur 101A au système périphérique sélectionné via le câblage réalisé par le dispositif d'extension de ports 101B, et l'interface graphique affichée sur l'écran est fournie par ledit système périphérique sélectionné au terminal d'interface utilisateur 101A via le câblage réalisé par le dispositif d'extension de ports 101B. Certaines touches du clavier K et/ou éventuellement certains boutons B1 à B6 et B11 à B16 peuvent rester dans le domaine du contrôle du terminal d'interface utilisateur 101A, par exemple pour permettre à l'utilisateur de demander que le système périphérique sélectionné relâche la main sur l'interface utilisateur et pour ainsi revenir à la page de sélection ou à une autre page de menu gérée par le terminal d'interface utilisateur 101A.

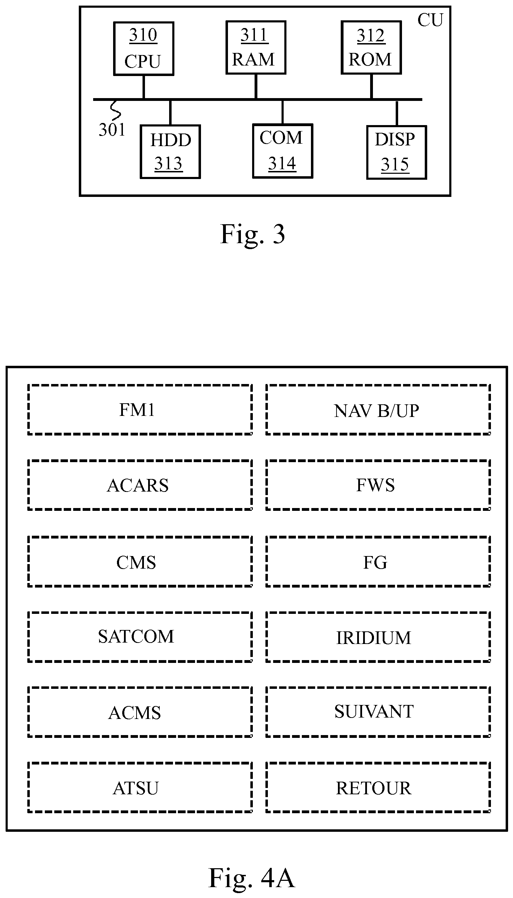

Plus précisément, la page de sélection est une page d'interface graphique GUI générée par le terminal d'interface utilisateur 101A. Cette page de sélection affiche une liste des systèmes périphériques connectés au terminal d'interface utilisateur 101A via le câblage réalisé par le dispositif d'extension de ports 101B. Des noms des systèmes périphériques en question sont affichés dans des zones d'affichage respectives A1 à A6 et A11 à A16 sur la page de sélection. Ces zones d'affichage A1 à A6 et A11 à A16 sont affichées en correspondance avec respectivement les boutons B1 à B6 et B11 à B16 en bordure d'écran. En pressant un des boutons B1 à B6 et B11 à B16, l'utilisateur sélectionne le système périphérique dont le nom est inscrit dans celle des zones d'affichage A1 à A6 et A11 à A16 qui est affichée en correspondance avec le bouton pressé. Un exemple de page de sélection affichée sur l'écran du terminal d'interface utilisateur 101A est présenté ci-après en relation avec la Fig. 4A.

La **Fig. 2B** illustre schématiquement le terminal d'interface utilisateur 101A selon un second agencement. Ce second agencement est proche du premier agencement présenté sur la Fig. 1B. La différence réside dans la présence d'un écran tactile 200B en remplacement de l'écran 200A. Ainsi, les zones d'affichage A1 à A6 et A11 à A16 sont des zones actives, dans le sens où un appui sur une desdites zones d'affichage permet de sélectionner le système périphérique dont le nom est affiché sur ladite zone d'affichage. L'écran tactile peut en outre afficher d'autres éléments graphiques, comme par exemple un clavier virtuel (non représenté sur la Fig. 2B).

La **Fig. 3** illustre schématiquement un exemple d'architecture matérielle d'une unité de contrôle CU (pour « Control Unit » en langue anglo-saxonne) incluse dans le terminal d'interface utilisateur 101A. L'unité de contrôle CU comporte alors, reliés par un bus de communication 301 : un processeur ou CPU (pour « Central Processing Unit» en langue anglo-saxonne) 310; une mémoire vive RAM (pour « Random Access Memory » en langue anglo-saxonne) 311 ; une mémoire morte ROM (pour « Read Only Memory » en langue anglo-saxonne) 312 ; une unité de stockage, telle qu'un disque dur HDD (pour « Hard Disk Drive » en langue anglo-saxonne) 313 ; un ensemble d'interfaces de communication COM 314 permettant de connecter l'unité de contrôle CU à plusieurs systèmes périphériques via le connecteur mâle MC ; et une interface de connexion DISP (pour « display » en langue anglo-saxonne) à l'écran du terminal d'interface utilisateur 101A.

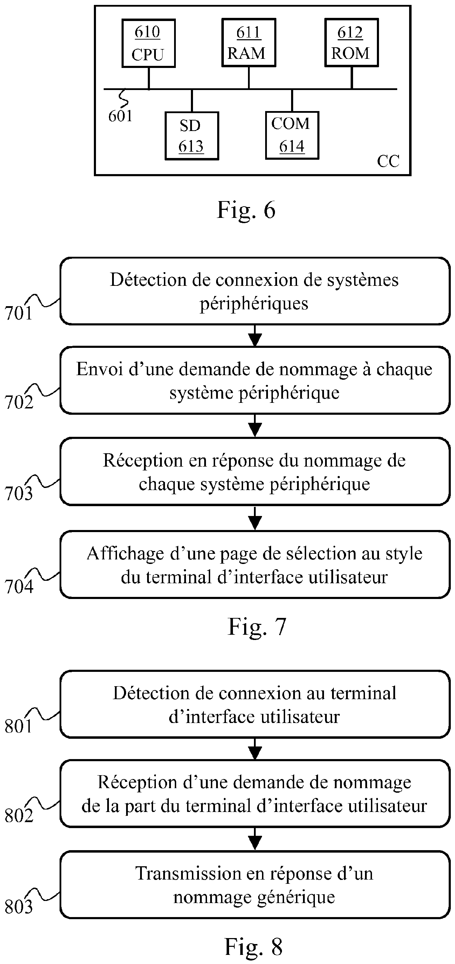

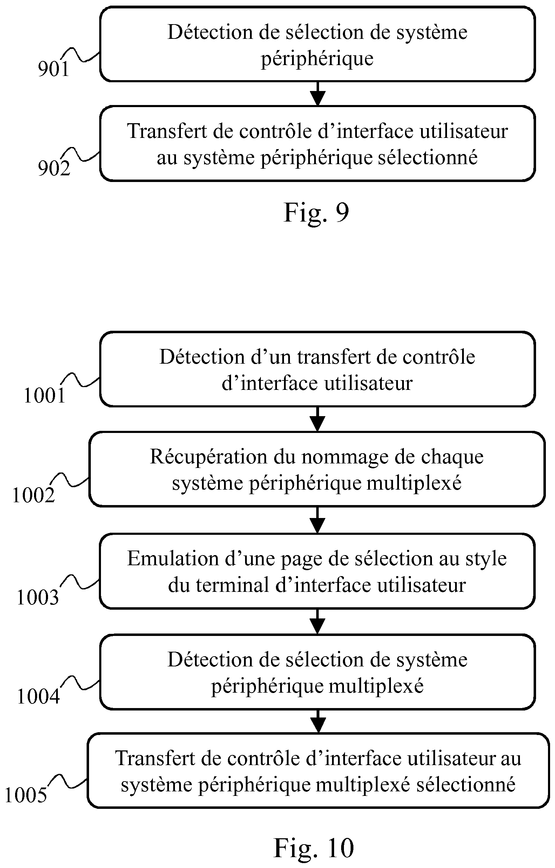

Le processeur CPU 310 est capable d'exécuter des instructions chargées dans la mémoire RAM 311 à partir de la mémoire ROM 312, d'une mémoire externe (non représentée), d'un support de stockage (tel que le disque dur HDD), ou d'un réseau de communication (non représenté). Lorsque l'unité de contrôle CU est mise sous tension, le processeur CPU 310 est capable de lire de la mémoire RAM 311 des instructions et de les exécuter. Ces instructions forment un programme d'ordinateur causant l'implémentation, par le processeur CPU 310, de tout ou partie des algorithmes et des étapes décrits ci-après en relation avec les Figs. 7 et 9.

Tout ou partie des algorithmes et des étapes décrits ci-après en relation avec les Figs. 7 et 9 peut ainsi être implémenté sous forme logicielle par exécution d'un ensemble d'instructions par une machine programmable, par exemple un DSP (« Digital Signal Processor » en langue anglo-saxonne) ou un microcontrôleur, ou être implémenté sous forme matérielle par une machine ou un composant dédié, par exemple un composant FPGA (pour « Field-Programmable Gate Array » en langue anglo-saxonne) ou ASIC (pour « Application-Specific Integrated Circuit » en langue anglo-saxonne). D'une manière générale, le terminal d'interface utilisateur 101A comporte de la circuiterie électronique adaptée pour implémenter, sous forme logicielle et/ou matérielle, les algorithmes et les étapes décrits ci-après en relation avec les Figs. 7 et 9.

La **Fig. 4A** illustre schématiquement un premier exemple d'affichage obtenu sur l'écran du terminal d'interface utilisateur 101A. Le premier exemple d'affichage représente la page de sélection susmentionnée.

Le bouton B16 (ou dans le cas où l'écran est tactile, la zone active d'affichage A16) est, dans ce premier exemple, réservé à un retour à une page d'interface graphique GUI, générée par le terminal d'interface utilisateur 101A, de niveau hiérarchique supérieur par rapport à la page de sélection. Par conséquent, la zone d'affichage A16 est libellée « RETOUR » et ne correspond pas à un système périphérique. Un appui sur le bouton B16 (ou dans le cas où l'écran est tactile, sur la zone active d'affichage A16) ne sélectionne donc pas de système périphérique parmi les systèmes périphériques connectés au terminal d'interface utilisateur 101A via le dispositif d'extension de ports 101B.

Dans ce premier exemple d'affichage, qui correspond à la page de sélection générée par le terminal d'interface utilisateur 101A :
- la zone d'affichage A1 est libellée FM1 (pour « Flight Management #1 » en langue anglo-saxonne) et le système périphérique correspondant est un système de gestion de vol ;
- la zone d'affichage A2 est libellée CMS (pour « Cabin Management System » en langue anglo-saxonne) et le système périphérique correspondant est un système de gestion de cabine ;
- la zone d'affichage A3 est libellée ACARS (pour « Aircraft Communication Addressing and Reporting System » en langue anglo-saxonne) et le système périphérique correspondant est un système de communication codée avec le sol ;
- la zone d'affichage A4 est libellée SATCOM (diminutif de « Satellite Communications » en langue anglo-saxonne) et le système périphérique correspondant est un système de communication satellite ;
- la zone d'affichage A5 est libellée ACMS (pour « Aircraft Condition Monitoring System » en langue anglo-saxonne) et le système périphérique correspondant est un système d'aide à la maintenance ;
- la zone d'affichage A6 est libellée ATSU (pour « Air Traffic Services Unit » en langue anglo-saxonne) et le système périphérique correspondant est un système de contrôle de circulation aérienne ;
- la zone d'affichage A11 est libellée NAV B/UP (pour « Navigation Back-Up » en langue anglo-saxonne) et le système périphérique correspondant est un système de navigation de secours ;
- la zone d'affichage A12 est libellée FWS (pour « Flight Warning System » en langue anglo-saxonne) et le système périphérique correspondant est un système de surveillance et d'alerte ;
- la zone d'affichage A13 est libellée FG (pour « Flight Guidance » en langue anglo-saxonne) et le système périphérique correspondant est un système de guidage en vol ;
- la zone d'affichage A14 est libellée IRIDIUM, en référence à la société du même nom spécialisée dans les systèmes de communication aéronautiques, le système périphérique correspondant est donc un système de communication ; et
- la zone d'affichage A15 est libellée SUIVANT. Ce nom ne correspond pas à un système périphérique en tant que tel. Un appui sur le bouton B15 (ou dans le cas où l'écran est tactile, sur la zone active d'affichage A15) ne sélectionne donc pas de système périphérique parmi les systèmes périphériques connectés au terminal d'interface utilisateur 101A pour lui donner la main, mais donne la main à une circuiterie de contrôle CC intégrée au dispositif d'extension de ports 101B. Cette circuiterie de contrôle CC émule un comportement de système périphérique, afin d'être transparente pour le terminal d'interface utilisateur 101A. Comme détaillé ci-après, cette circuiterie de contrôle CC permet d'étendre la quantité de systèmes périphériques qui peuvent être simultanément connectés au terminal d'interface utilisateur 101A.

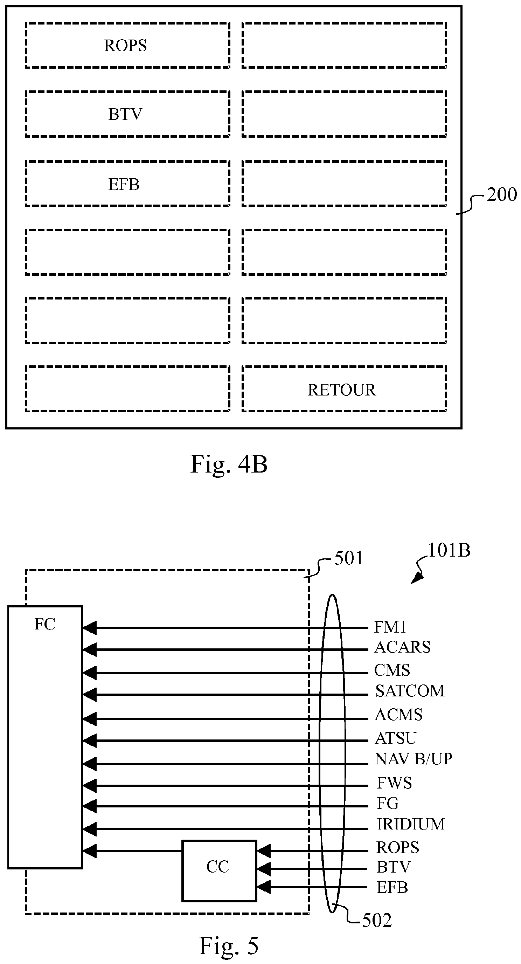

La **Fig. 4B** illustre schématiquement un second exemple d'affichage obtenu sur l'écran du terminal d'interface utilisateur 101A. Ce second exemple d'affichage correspond à une page d'interface graphique générée par la circuiterie de contrôle CC lorsque le terminal d'interface utilisateur 101A donne la main à ladite circuiterie de contrôle CC. La page d'interface graphique ainsi générée par la circuiterie de contrôle CC est alors adaptée pour permettre à l'utilisateur de sélectionner des systèmes périphériques qui ne sont pas directement détectables par le terminal d'interface utilisateur 101A. Cette page d'interface graphique générée par la circuiterie de contrôle CC est au style de la page de sélection générée par le terminal d'interface utilisateur 101A, de sorte que l'utilisateur ne se rend pas compte que la main a été donnée à ladite circuiterie de contrôle CC. En d'autres termes, la circuiterie de contrôle CC émule une page de sélection. De cette façon, la présence de cette circuiterie de contrôle CC est totalement transparente pour l'utilisateur.

Dans un mode de réalisation particulier illustré sur la Fig. 4B, un élément est réservé à un retour à la page de sélection générée par le terminal d'interface utilisateur 101A. Le bouton B16 (ou dans le cas où l'écran est tactile, la zone active d'affichage A16) est par exemple utilisé à cet effet. Par conséquent, la zone d'affichage A16 est aussi libellée « RETOUR » et ne correspond pas à un système périphérique. Un appui sur le bouton B16 (ou sur dans le cas où l'écran est tactile, sur la zone active d'affichage A16) ne sélectionne donc pas de système périphérique parmi les systèmes périphériques qui sont connectés au dispositif d'extension de ports 101B mais qui ne sont pas directement détectables par le terminal d'interface utilisateur 101A. En effet, un appui sur le bouton B16 (ou dans le cas où l'écran est tactile, sur la zone active d'affichage A16) redonne la main au terminal d'interface utilisateur 101A. En d'autres termes, la circuiterie de contrôle CC effectue alors un re-transfert de contrôle d'interface graphique vers ledit terminal d'interface utilisateur 101A, pour affichage de la véritable page de sélection.

Dans ce second exemple d'affichage, qui correspond à la page d'interface graphique générée par la circuiterie de contrôle CC sous la forme d'une page de sélection émulée :
- la zone d'affichage A1 est libellée ROPS (pour « Runway Overrun Prévention System » en langue anglo-saxonne) et le système périphérique correspondant est un système de prévention de sortie de piste ;
- la zone d'affichage A2 est libellée BTV (pour « Brake To Vacate » en langue anglo-saxonne) et le système périphérique correspondant est un système de contrôle de distance de freinage à l'atterrissage ; et
- la zone d'affichage A3 est libellée (pour « Electronic Flight Bag » en langue anglo-saxonne) et le système périphérique correspondant est un système informatique d'assistance au pilote incluant des manuels de référence et autres applications spécifiques à la gestion de vol par le pilote.

Les autres zones d'affichage sont laissées libres sur la Fig. 4B. D'autres systèmes périphériques peuvent toutefois être connectés à la circuiterie de contrôle CC et ainsi apparaître sur la page d'interface graphique générée par la circuiterie de contrôle CC sous une forme émulée de ladite page de sélection générée par le terminal d'interface utilisateur 101A. Ainsi, grâce à la circuiterie de contrôle CC, ces trois systèmes périphériques peuvent être utilisés par l'utilisateur en manipulant le terminal d'interface utilisateur 101A, alors qu'un seul système périphérique parmi ces trois systèmes périphériques aurait pu être connecté au terminal d'interface utilisateur 101A sans la présence de cette circuiterie de contrôle CC.

La **Fig. 5** illustre schématiquement le dispositif d'extension de ports 101B, qui inclut la circuiterie de contrôle CC déjà évoquée.

Le dispositif d'extension de ports 101B inclut un connecteur femelle FC permettant la connexion physique du dispositif d'extension de ports 101B au terminal d'interface utilisateur 101A. Le connecteur femelle FC est préférentiellement conforme au standard ARINC-739.

Le dispositif d'extension de ports 101B inclut un câblage permettant de brancher directement des systèmes périphériques au terminal d'interface utilisateur 101A via le connecteur femelle FC. C'est le cas, de manière illustrative, des systèmes périphériques FM1, ACARS, CMS, SATCOM, ACMS, ATSU, NAV B/UP, FWS, FG et IRIDIUM. Le dispositif d'extension de ports 101B inclut un autre câblage permettant de brancher, via la circuiterie de contrôle CC, d'autres systèmes périphériques qui ne peuvent pas être connectés dans leur ensemble directement au terminal d'interface utilisateur 101A, faute de ports sur ledit terminal d'interface utilisateur 101A. C'est le cas, de manière illustrative, des systèmes périphériques ROPS, BTV et EFB. Ces câblages forment ainsi un faisceau 502 (« bundle » en langue anglo-saxonne), et la circuiterie de contrôle CC est incorporée dans un boîtier, électriquement isolant, assemblant le faisceau 502 à des contacteurs du connecteur femelle FC assurant une liaison électrique avec le connecteur mâle MC du terminal d'interface utilisateur 101A. Il est ainsi possible d'utiliser un même facteur de forme de connecteur que celui qui serait utilisé dans le cas où la quantité de systèmes périphériques à connecter n'excédait pas la capacité de connectique du terminal d'interface utilisateur 101A.

A noter que le câblage reliant des systèmes périphériques directement au terminal d'interface utilisateur 101A peut, en variante, être réalisé de manière indépendante du câblage des autres systèmes périphériques au terminal d'interface utilisateur 101A via la circuiterie de contrôle CC, et ainsi s'appuyer sur un ou plusieurs connecteurs distincts du connecteur femelle FC du dispositif d'extension de ports 101B.

La **Fig. 6** illustre schématiquement un exemple d'architecture matérielle de la circuiterie de contrôle CC incluse dans le dispositif d'extension de ports 101B. La circuiterie de contrôle CC comporte alors, reliés par un bus de communication 601 : un processeur ou CPU 610 ; une mémoire vive RAM 611 ; une mémoire morte ROM 612 ; une unité de stockage, telle qu'un lecteur de cartes SD 613, ou une mémoire morte programmable et électriquement effaçable EEPROM (« Electrically-Erasable Programmable Read-Only Memory » en langue anglo-saxonne), telle qu'une mémoire Flash ; un ensemble d'interfaces de communication COM 614 permettant, d'un côté, de connecter la circuiterie de contrôle CC au terminal d'interface utilisateur 101A via le connecteur mâle MC, et de l'autre côté, de connecter la circuiterie de contrôle CC à plusieurs systèmes périphériques.

Le processeur CPU 610 est capable d'exécuter des instructions chargées dans la mémoire RAM 611 à partir de la mémoire ROM 612, d'une mémoire externe (non représentée), d'un support de stockage (tel qu'une carte SD), ou d'un réseau de communication (non représenté). Lorsque la circuiterie de contrôle CC est mise sous tension, le processeur CPU 610 est capable de lire de la mémoire RAM 611 des instructions et de les exécuter. Ces instructions forment un programme d'ordinateur causant l'implémentation, par le processeur CPU 610, de tout ou partie des algorithmes et des étapes décrits ci-après en relation avec les Figs. 8 et 10.

Tout ou partie des algorithmes et des étapes décrits ci-après en relation avec les Figs. 8 et 10 peut ainsi être implémenté sous forme logicielle par exécution d'un ensemble d'instructions par une machine programmable, par exemple un processeur DSP ou un microcontrôleur, ou être implémenté sous forme matérielle par une machine ou un composant dédié, par exemple un composant FPGA ou ASIC. D'une manière générale, le dispositif d'extension de ports 101B comporte de la circuiterie électronique adaptée pour implémenter, sous forme logicielle et/ou matérielle, les algorithmes et les étapes décrits ci-après en relation avec les Figs. 8 et 10.

En termes d'alimentation électrique, la circuiterie de contrôle CC est préférentiellement alimentée par une dérivation d'un câble, présent dans le faisceau 502, destiné à alimenter le terminal d'interface utilisateur 101A. La circuiterie de contrôle CC étant de faible complexité, alimenter ladite circuiterie de contrôle CC en plus du terminal d'interface utilisateur 101A a une incidence négligeable sur le budget énergétique d'alimentation électrique.

La **Fig. 7** illustre schématiquement un algorithme d'affichage de la page de sélection par le terminal d'interface utilisateur 101A, permettant notamment d'obtenir le premier exemple d'affichage de la Fig. 4A.

Dans une étape 701, le terminal d'interface utilisateur 101A détecte que des systèmes périphériques sont physiquement connectés audit terminal d'interface utilisateur 101A. Le terminal d'interface utilisateur 101A n'a pas connaissance qu'au moins un des systèmes périphériques détectés est en réalité la circuiterie de contrôle CC (il peut en effet y avoir plusieurs telles circuiteries de contrôle CC au sein du même dispositif d'extension de ports 101B). Les autres systèmes périphériques détectés sont ceux qui sont directement connectés au terminal d'interface utilisateur 101A, les systèmes périphériques restants étant, du point de vue du terminal d'interface utilisateur 101A, masqués par la circuiterie de contrôle CC.

Dans une étape 702, le terminal d'interface utilisateur 101A envoie à chaque système périphérique connecté une demande de nommage. Cela déclenche une procédure au sein de la circuiterie de contrôle CC, telle que décrite ci-après en relation avec la Fig. 8.

Dans une étape 703, le terminal d'interface utilisateur 101A reçoit en réponse le nommage de chaque système périphérique connecté, y compris le nommage fourni par la circuiterie de contrôle CC.

Dans une étape 704, le terminal d'interface utilisateur 101A affiche la page de sélection. La page de sélection est affichée dans un style qui est propre au terminal d'interface utilisateur 101A (puisque c'est le terminal d'interface utilisateur 101A qui génère cette partie de l'interface graphique présentée à l'utilisateur). La page de sélection liste les réponses reçues à l'étape 703, comme par exemple précédemment décrit en relation avec la Fig. 4A.

La **Fig. 8** illustre schématiquement un algorithme de réponse par la circuiterie de contrôle CC à la demande du terminal d'interface utilisateur 101A envoyée à l'étape 702.

Dans une étape 801, la circuiterie de contrôle CC détecte être connectée au terminal d'interface utilisateur 101A.

Dans une étape 802, la circuiterie de contrôle CC reçoit la demande transmise par le terminal d'interface utilisateur 101A à l'étape 702.

Dans une étape 803, la circuiterie de contrôle CC émule un comportement de système périphérique et répond à la demande du terminal d'interface utilisateur 101A avec un nommage représentatif d'une action de navigation de menu du terminal d'interface utilisateur 101A. Un tel nommage invite l'utilisateur à le sélectionner pour découvrir d'autres systèmes périphériques accessibles. Par exemple, le nommage générique fourni par la circuiterie de contrôle CC est : « SUIVANT » (comme indiqué sur la Fig. 4A), « PAGE SUIVANTE », « PLUS », ou « ... ». Le terminal d'interface utilisateur 101A croit ainsi recevoir le nommage effectif d'un système périphérique, mais reçoit en réalité un nom perçu par l'utilisateur comme représentatif d'une action de navigation de menu de l'interface graphique du terminal d'interface utilisateur 101A.

La **Fig. 9** illustre schématiquement un algorithme de gestion d'affichage par le terminal d'interface utilisateur 101A, permettant notamment d'obtenir le second exemple d'affichage de la Fig. 4B, et ce, de manière transparente pour ledit terminal d'interface utilisateur 101A.

Dans une étape 901, le terminal d'interface utilisateur 101A détecte une sélection, par l'utilisateur, d'un système périphérique listé dans la page de sélection générée par ledit terminal d'interface utilisateur 101A.

Dans une étape 902, le terminal d'interface utilisateur 101A transfère le contrôle d'interface utilisateur audit système périphérique, c'est-à-dire que le terminal d'interface utilisateur 101A transfère les contrôles effectués par l'utilisateur sur le terminal d'interface utilisateur 101A audit système périphérique pour traitement, et ledit terminal d'interface utilisateur 101A reçoit l'interface graphique à afficher en provenance dudit système périphérique.

Si la sélection concerne un système périphérique directement connecté au terminal d'interface utilisateur 101A, le terminal d'interface utilisateur 101A passe ainsi la main audit système périphérique. Si la sélection concerne la circuiterie de contrôle CC, le terminal d'interface utilisateur 101A passe ainsi la main à la circuiterie de contrôle CC comme si ladite circuiterie de contrôle CC était un système périphérique. Cela déclenche une procédure au sein de la circuiterie de contrôle CC, telle que décrite ci-après en relation avec la Fig. 10. Cela permet à la circuiterie de contrôle CC de faire afficher, par le terminal d'interface utilisateur 101A, une émulation de page de sélection, comme illustré par la Fig. 4B.

La **Fig. 10** illustre schématiquement un algorithme de gestion d'affichage par la circuiterie de contrôle CC, afin de permettre d'obtenir le second exemple d'affichage de la Fig. 4B.

Dans une étape 1001, la circuiterie de contrôle CC détecte un transfert de contrôle de l'interface utilisateur du terminal d'interface utilisateur 101A. L'étape 1001 fait suite à l'étape 902 effectuée par ledit terminal d'interface utilisateur 101A.

Dans une étape 1002, la circuiterie de contrôle CC récupère un nommage pour chaque système périphérique connecté à ladite circuiterie de contrôle CC. Par exemple, ce nommage est inscrit, par configuration antérieure, au sein d'une mémoire non-volatile de la circuiterie de contrôle CC. Préférentiellement, la circuiterie de contrôle CC envoie à chaque système périphérique connecté à ladite circuiterie de contrôle CC une demande de nommage, comme le fait le terminal d'interface utilisateur 101A vis-à-vis des systèmes périphériques qui lui sont directement connectés. La circuiterie de contrôle CC reçoit en réponse le nommage de chaque système périphérique connecté à ladite circuiterie de contrôle CC.

Dans une étape 1003, la circuiterie de contrôle CC émule une page de sélection au style de la page de sélection générée par le terminal d'interface utilisateur 101A, de sorte que l'utilisateur ne se rend pas compte que la main a été donnée à ladite circuiterie de contrôle CC. La page de sélection émulée liste les systèmes périphériques dont le nommage a été récupéré à l'étape 1002, comme par exemple précédemment décrit en relation avec la Fig. 4B. La page de sélection émulée est ainsi transmise au terminal d'interface utilisateur 101A pour affichage à l'écran.

Dans une étape 1004, la circuiterie de contrôle CC détecte, grâce au transfert de contrôle, une sélection d'un système périphérique, par l'utilisateur, d'un système périphérique listé dans la page de sélection émulée par la circuiterie de contrôle CC.

Dans une étape 1005, la circuiterie de contrôle CC transfère le contrôle d'interface utilisateur audit système périphérique, c'est-à-dire que le terminal d'interface utilisateur 101A transfère les contrôles effectués par l'utilisateur sur le terminal d'interface utilisateur 101A à ladite circuiterie de contrôle CC, et ladite circuiterie de contrôle CC transfère ces contrôles audit système périphérique pour traitement. Dans l'autre sens, la circuiterie de contrôle CC 101A reçoit l'interface graphique à afficher en provenance dudit système périphérique, et transfère ensuite cette interface graphique à afficher audit terminal d'interface utilisateur 101A.

La circuiterie de contrôle CC 101A agit ainsi comme un relais transparent entre le terminal d'interface utilisateur 101A et ledit système périphérique.

## Revendications

1. Dispositif d'extension de ports (101B) destiné à être connecté à un terminal d'interface utilisateur (101A) dans un aéronef (100), le terminal d'interface utilisateur (101A) étant destiné à lui connecter directement des systèmes périphériques (FM1, ACARS) et à afficher sur un écran (200A, 200B) dudit terminal d'interface utilisateur (101A) une page de sélection adaptée pour permettre à un utilisateur de sélectionner un système périphérique parmi lesdits systèmes périphériques (FM1, ACARS) de sorte à transférer un contrôle d'interface graphique au système périphérique sélectionné,
**caractérisé en ce que**, d'autres systèmes périphériques (ROPS, BTV) étant connectés au terminal d'interface utilisateur (101A) via une circuiterie de contrôle (CC) du dispositif d'extension de ports (101B), la circuiterie de contrôle (CC) est adaptée pour émuler un comportement de système périphérique et pour implémenter :
- des moyens pour répondre (803), à une demande de nommage émanant du terminal d'interface utilisateur, par un nommage représentatif d'une action de navigation de menu du terminal d'interface utilisateur ;
- lorsque le terminal d'interface utilisateur (101A) effectue (902) un transfert de contrôle d'interface graphique dudit terminal d'interface utilisateur (101A) à ladite circuiterie de contrôle (CC), des moyens pour émuler (1003) une autre page de sélection, au style de la page de sélection générée par le terminal d'interface utilisateur (101A), adaptée pour permettre à l'utilisateur de sélectionner un système périphérique parmi lesdits autres systèmes périphériques (ROPS, BTV) ; et
- lorsque ladite circuiterie de contrôle (CC) détecte (1004) une sélection d'un système périphérique parmi lesdits autres systèmes périphériques grâce au transfert de contrôle d'interface graphique, des moyens pour effectuer (1005) un transfert de contrôle d'interface graphique dudit terminal d'interface utilisateur (101A) audit système périphérique sélectionné (ROPS, BTV), la circuiterie de contrôle (CC) agissant comme un relais entre ledit système périphérique sélectionné (ROPS, BTV) et le terminal d'interface utilisateur (101A).

2. Dispositif d'extension de ports (101B) selon la revendication 1, **caractérisé en ce que** le dispositif d'extension de ports (101B) comporte un connecteur (FC) destiné à brancher le dispositif d'extension de ports (101B) au terminal d'interface utilisateur (101A) et un câblage destiné à brancher lesdits autres systèmes périphériques (ROPS, BTV), et **en ce que** la circuiterie de contrôle (CC) est incluse dans un boîtier (501) reliant ledit connecteur (FC) et ledit câblage.

3. Dispositif d'extension de ports (101B) selon la revendication 2, **caractérisé en ce que** le dispositif d'extension de ports (101B) comporte un autre câblage destiné à brancher les systèmes périphériques (FM1, ACARS) à connecter directement audit terminal d'interface utilisateur (101A), et **en ce que** ledit autre câblage est branché directement sur ledit connecteur (FC).

4. Dispositif d'extension de ports selon l'une quelconque des revendications 2 et 3, **caractérisé en ce que** le connecteur (FC) est un connecteur femelle conforme au standard ARINC-739.

5. Dispositif d'extension de ports selon l'une quelconque des revendications 1 à 4, **caractérisé en ce que** ladite autre page de sélection comporte un élément réservé à un retour à la page de sélection générée par le terminal d'interface utilisateur (101A), et la circuiterie de contrôle (CC) est adaptée pour implémenter des moyens pour effectuer un re-transfert de contrôle d'interface graphique vers ledit terminal d'interface utilisateur, lorsque ledit élément est sélectionné par l'utilisateur.

6. Dispositif d'extension de ports selon l'une quelconque des revendications 1 à 5, **caractérisé en ce que**, pour définir ladite autre page de sélection, la circuiterie de contrôle (CC) est adaptée pour implémenter des moyens pour récupérer (1002) un nommage de chaque système périphérique qui lui est connecté en envoyant une demande de nommage à chaque dit système périphérique connecté.

7. Système de contrôle (101) de systèmes périphériques, incluant un terminal d'interface utilisateur (101A), des systèmes périphériques (FM1, ACARS, ROPS, BTV) et un dispositif d'extension de ports (101B) selon l'une quelconque des revendications 1 à 5, un sous-ensemble (FM1, ACARS) des systèmes périphériques étant directement connecté au terminal d'interface utilisateur (101A) et un autre sous-ensemble des systèmes périphériques (ROPS, BTV) étant connecté au terminal d'interface utilisateur (101A) par le biais de la circuiterie de contrôle (CC) du dispositif d'extension de ports (101B).

8. Aéronef (100) comportant un système de contrôle selon la revendication 7.

9. Procédé implémenté par une circuiterie de contrôle (CC) d'un dispositif d'extension de ports (101B) connecté à un terminal d'interface utilisateur (101A) dans un aéronef (100), le terminal d'interface utilisateur (101A) étant adapté à lui connecter directement des systèmes périphériques (FM1, ACARS) et à afficher sur un écran dudit terminal d'interface utilisateur (101A) une page de sélection adaptée pour permettre à un utilisateur de sélectionner un système périphérique parmi lesdits systèmes périphériques (FM1, ACARS) de sorte à transférer un contrôle d'interface graphique au système périphérique sélectionné,
**caractérisé en ce que**, d'autres systèmes périphériques (ROPS, BTV) étant connectés au terminal d'interface utilisateur (101A) via la circuiterie de contrôle (CC), la circuiterie de contrôle (CC) émulant un comportement de système périphérique et implémentant les étapes suivantes :
- répondre (803), à une demande de nommage émanant du terminal d'interface utilisateur, par un nommage représentatif d'une action de navigation de menu du terminal d'interface utilisateur (101A) ;
- lorsque le terminal d'interface utilisateur (101A) effectue (902) un transfert de contrôle d'interface graphique dudit terminal d'interface utilisateur (101A) à ladite circuiterie de contrôle (CC), émuler (1003) une autre page de sélection, au style de la page de sélection générée par le terminal d'interface utilisateur (101A), adaptée pour permettre à l'utilisateur de sélectionner un système périphérique parmi lesdits autres systèmes périphériques (ROPS, BTV) ; et
- lorsque ladite circuiterie de contrôle (CC) détecte (1004) une sélection d'un système périphérique parmi lesdits autres systèmes périphériques (ROPS, BTV) grâce au transfert de contrôle d'interface graphique, effectuer (1005) un transfert de contrôle d'interface graphique dudit terminal d'interface utilisateur (101A) audit système périphérique sélectionné (ROPS, BTV), la circuiterie de contrôle (CC) agissant comme un relais entre ledit système périphérique sélectionné (ROPS, BTV) et le terminal d'interface utilisateur (101A).

10. Produit programme d'ordinateur, **caractérisé en ce qu'**il comporte des instructions entraînant l'exécution, par un dispositif d'extension de ports (101B), du procédé selon la revendication 9, lorsque lesdites instructions sont exécutées par un processeur (610) d'une circuiterie de contrôle (CC) dudit dispositif d'extension de ports (101B).

11. Support de stockage, **caractérisé en ce qu'**il stocke un programme d'ordinateur comportant des instructions entraînant l'exécution, par un dispositif d'extension de ports (101B), du procédé selon la revendication 9, lorsque lesdites instructions sont exécutées par un processeur (610) d'une circuiterie de contrôle (CC) dudit dispositif d'extension de ports (101B).

## Patentansprüche

1. Vorrichtung zur Porterweiterung (101B), welche dazu bestimmt ist, mit einem Benutzerschnittstellenendgerät (101A) in einem Luftfahrzeug (100) verbunden zu werden, wobei das Benutzerschnittstellenendgerät (101A) dazu bestimmt ist, dass periphere Systeme (FM1, ACARS) direkt mit ihm verbunden werden, und dazu, auf einem Bildschirm (200A, 200B) des Benutzerschnittstellenendgerätes (101A) eine Auswahlseite anzuzeigen, die dafür ausgelegt ist, einem Benutzer zu ermöglichen, ein peripheres System aus den peripheren Systemen (FM1, ACARS) auszuwählen, um eine Steuerung der grafischen Schnittstelle an das ausgewählte periphere System zu übertragen,
**dadurch gekennzeichnet, dass**, wenn andere periphere Systeme (ROPS, BTV) über eine Steuerschaltung (CC) der Vorrichtung zur Porterweiterung (101B) mit dem Benutzerschnittstellenendgerät (101A) verbunden sind, die Steuerschaltung (CC) dafür ausgelegt ist, ein Verhalten eines peripheren Systems zu emulieren, und zu implementieren:
- Mittel zum Reagieren (803) auf eine von dem Benutzerschnittstellenendgerät ausgehende Benennungsanforderung mit einer Benennung, die für eine Aktion der Menünavigation des Benutzerschnittstellenendgerätes repräsentativ ist;
- wenn das Benutzerschnittstellenendgerät (101A) eine Übertragung der Steuerung der grafischen Schnittstelle von dem Benutzerschnittstellenendgerät (101A) an die Steuerschaltung (CC) durchführt (902), Mittel zum Emulieren (1003) einer weiteren Auswahlseite im Stil der von dem Benutzerschnittstellenendgerät (101A) erzeugten Auswahlseite, die dafür ausgelegt ist, dem Benutzer zu ermöglichen, ein peripheres System aus den anderen peripheren Systemen (ROPS, BTV) auszuwählen; und
- wenn die Steuerschaltung (CC) eine Auswahl eines peripheren Systems aus den anderen peripheren Systemen dank der Übertragung der Steuerung der grafischen Schnittstelle erkennt (1004), Mittel zum Durchführen (1005) einer Übertragung der Steuerung der grafischen Schnittstelle von dem Benutzerschnittstellenendgerät (101A) an das ausgewählte periphere System (ROPS, BTV), wobei die Steuerschaltung (CC) als Relais zwischen dem ausgewählten peripheren System (ROPS, BTV) und dem Benutzerschnittstellenendgerät (101A) fungiert.

2. Vorrichtung zur Porterweiterung (101B) nach Anspruch 1, **dadurch gekennzeichnet, dass** die Vorrichtung zur Porterweiterung (101B) einen Verbinder (FC), der dazu bestimmt ist, die Vorrichtung zur Porterweiterung (101B) an das Benutzerschnittstellenendgerät (101A) anzuschließen, und einen Kabelsatz, der dazu bestimmt ist, die anderen peripheren Systeme (ROPS, BTV) anzuschließen, aufweist, und dadurch, dass die Steuerschaltung (CC) in einem Gehäuse (501) enthalten ist, das den Verbinder (FC) und den Kabelsatz verbindet.

3. Vorrichtung zur Porterweiterung (101B) nach Anspruch 2, **dadurch gekennzeichnet, dass** die Vorrichtung zur Porterweiterung (101B) einen weiteren Kabelsatz aufweist, der dazu bestimmt ist, die peripheren Systeme (FM1, ACARS) anzuschließen, die direkt mit dem Benutzerschnittstellenendgerät (101A) zu verbinden sind, und dadurch, dass der weitere Kabelsatz direkt an den Verbinder (FC) angeschlossen ist.

4. Vorrichtung zur Porterweiterung nach einem der Ansprüche 2 und 3, **dadurch gekennzeichnet, dass** der Verbinder (FC) eine Steckbuchse ist, die mit dem Standard ARINC-739 konform ist.

5. Vorrichtung zur Porterweiterung nach einem der Ansprüche 1 bis 4, **dadurch gekennzeichnet, dass** die weitere Auswahlseite ein Element aufweist, das für eine Rückkehr zu der von dem Benutzerschnittstellenendgerät (101A) erzeugten Auswahlseite reserviert ist, und die Steuerschaltung (CC) dafür ausgelegt ist, Mittel zur Durchführung einer Rückübertragung der Steuerung der grafischen Schnittstelle an das Benutzerschnittstellenendgerät zu implementieren, wenn das Element vom Benutzer ausgewählt wird.

6. Vorrichtung zur Porterweiterung nach einem der Ansprüche 1 bis 5, **dadurch gekennzeichnet, dass**, um die weitere Auswahlseite zu definieren, die Steuerschaltung (CC) dafür ausgelegt ist, Mittel zum Gewinnen (1002) einer Benennung jedes peripheren Systems, das mit ihr verbunden ist, durch Senden einer Benennungsanforderung an jedes solche verbundene periphere System zu implementieren.

7. System zur Steuerung (101) peripherer Systeme, welches ein Benutzerschnittstellenendgerät (101A), periphere Systeme (FM1, ACARS, ROPS, BTV) und eine Vorrichtung zur Porterweiterung (101B) nach einem der Ansprüche 1 bis 5 aufweist, wobei eine Teilmenge (FM1, ACARS) der peripheren Systeme direkt mit dem Benutzerschnittstellenendgerät (101A) verbunden ist und eine andere Teilmenge der peripheren Systeme (ROPS, BTV) mit dem Benutzerschnittstellenendgerät (101A) über die Steuerschaltung (CC) der Vorrichtung zur Porterweiterung (101B) verbunden ist.

8. Luftfahrzeug (100), welches ein System zur Steuerung nach Anspruch 7 aufweist.

9. Verfahren, welches von einer Steuerschaltung (CC) einer der Vorrichtung zur Porterweiterung (101B) implementiert wird, die mit einem Benutzerschnittstellenendgerät (101A) in einem Luftfahrzeug (100) verbunden ist, wobei das Benutzerschnittstellenendgerät (101A) dafür ausgelegt ist, dass periphere Systeme (FM1, ACARS) direkt mit ihm verbunden werden, und dafür, auf einem Bildschirm des Benutzerschnittstellenendgerätes (101A) eine Auswahlseite anzuzeigen, die dafür ausgelegt ist, einem Benutzer zu ermöglichen, ein peripheres System aus den peripheren Systemen (FM1, ACARS) auszuwählen, um eine Steuerung der grafischen Schnittstelle an das ausgewählte periphere System zu übertragen,
**dadurch gekennzeichnet, dass**, wenn andere periphere Systeme (ROPS, BTV) über die Steuerschaltung (CC) mit dem Benutzerschnittstellenendgerät (101A) verbunden sind, die Steuerschaltung (CC) ein Verhalten eines peripheren Systems emuliert und die folgenden Schritte implementiert:
- Reagieren (803) auf eine von dem Benutzerschnittstellenendgerät ausgehende Benennungsanforderung mit einer Benennung, die für eine Aktion der Menünavigation des Benutzerschnittstellenendgerätes (101A) repräsentativ ist;
- wenn das Benutzerschnittstellenendgerät (101A) eine Übertragung der Steuerung der grafischen Schnittstelle von dem Benutzerschnittstellenendgerät (101A) an die Steuerschaltung (CC) durchführt (902), Emulieren (1003) einer weiteren Auswahlseite im Stil der von dem Benutzerschnittstellenendgerät (101A) erzeugten Auswahlseite, die dafür ausgelegt ist, dem Benutzer zu ermöglichen, ein peripheres System aus den anderen peripheren Systemen (ROPS, BTV) auszuwählen; und
- wenn die Steuerschaltung (CC) eine Auswahl eines peripheren Systems aus den anderen peripheren Systemen (ROPS, BTV) dank der Übertragung der Steuerung der grafischen Schnittstelle erkennt (1004), Durchführen (1005) einer Übertragung der Steuerung der grafischen Schnittstelle von dem Benutzerschnittstellenendgerät (101A) an das ausgewählte periphere System (ROPS, BTV), wobei die Steuerschaltung (CC) als Relais zwischen dem ausgewählten peripheren System (ROPS, BTV) und dem Benutzerschnittstellenendgerät (101A) fungiert.

10. Computerprogrammprodukt, **dadurch gekennzeichnet, dass** es Anweisungen umfasst, welche die Ausführung des Verfahrens nach Anspruch 9 durch eine Vorrichtung zur Porterweiterung (101B) zur Folge haben, wenn die Anweisungen von einem Prozessor (610) einer Steuerschaltung (CC) der Vorrichtung zur Porterweiterung (101B) ausgeführt werden.

11. Speichermedium, **dadurch gekennzeichnet, dass** es ein Computerprogramm speichert, das Anweisungen umfasst, welche die Ausführung des Verfahrens nach Anspruch 9 durch eine Vorrichtung zur Porterweiterung (101B) zur Folge haben, wenn die Anweisungen von einem Prozessor (610) einer Steuerschaltung (CC) der Vorrichtung zur Porterweiterung (101B) ausgeführt werden.

## Claims

1. Port extension device (101B) intended to be connected to a user interface terminal (101A) in an aircraft (100), the user interface terminal (101A) being intended to directly connect to it peripheral systems (FM1, ACARS) and to display on a screen (200A, 200B) of said user interface terminal (101A) a selection page suitable for allowing a user to select a peripheral system out of said peripheral systems (FM1, ACARS) so as to transfer graphical interface control to the selected peripheral system, **characterized in that**, other peripheral systems (ROPS, BTV) being connected to the user interface terminal (101A) via control circuitry (CC) of the port extension device (101B), the control circuitry (CC) is suitable for emulating a peripheral system behaviour and for implementing:
- means for responding (803), to a naming request emanating from the user interface terminal, by a naming representative of a user interface terminal menu navigation action;
- when the user interface terminal (101A) performs (902) a transfer of graphical interface control from said user interface terminal (101A) to said control circuitry (CC), means for emulating (1003) another selection page, in the style of the selection page generated by the user interface terminal (101A), suitable for allowing a user to select a peripheral system out of said other peripheral systems (ROPS, BTV); and
- when said control circuity (CC) detects (1004) a selection of a peripheral system out of said other peripheral systems through the transfer of graphical interface control, means for performing (1005) a transfer of graphical interface control from said user interface terminal (101A) to said selected peripheral system (ROPS, BTV), the control circuitry (CC) acting as a relay between said selected peripheral system (ROPS, BTV) and the user interface terminal (101A).

2. Port extension device (101B) according to Claim 1, **characterized in that** the port extension device (101B) comprises a connector (FC) intended to connect the port extension device (101B) to the user interface terminal (101A) and a wiring intended to connect said other peripheral systems (ROPS, BTV), and **in that** the control circuitry (CC) is included in a module (501) linking said connector (FC) and said wiring.

3. Port extension device (101B) according to Claim 2, **characterized in that** the port extension device (101B) comprises another wiring intended to connect the peripheral systems (FM1, ACARS) to be connected directly to said user interface terminal (101A), and **in that** said other wiring is connected directly to said connector (FC).

4. Port extension device according to either one of Claims 2 and 3, **characterized in that** the connector (FC) is a female connector conforming to the ARINC-739 standard.

5. Port extension device according to any one of Claims 1 to 4, **characterized in that** said other selection page comprises an element reserved for a return to the selection page generated by the user interface terminal (101A), and the control circuitry (CC) is suitable for implementing means for performing a retransfer of graphical interface control to said user interface terminal, when said element is selected by the user.

6. Port extension device according to any one of Claims 1 to 5, **characterized in that**, to define said other selection page, the control circuitry (CC) is suitable for implementing means for retrieving (1002) a naming of each peripheral system which is connected to it by sending a naming request to each said connected peripheral system.

7. Peripheral systems control system (101), including a user interface terminal (101A), peripheral systems (FM1, ACARS, ROPS, BTV) and a port extension device (101B) according to any one of Claims 1 to 5, a subset (FM1, ACARS) of the peripheral systems being directly connected to the user interface terminal (101A) and another subset of the peripheral systems (ROPS, BTV) being connected to the user interface terminal (101A) through the control circuitry (CC) of the port extension device (101B).

8. Aircraft (100) comprising a control system according to Claim 7.

9. Method implemented by control circuitry (CC) of a port extension device (101B) connected to a user interface terminal (101A) in an aircraft, the user interface terminal (101A) being suitable for directly connecting to it peripheral systems (FM1, ACARS) and for displaying on a screen of said user interface terminal (101A) a selection page suitable for allowing a user to select a peripheral system out of said peripheral systems (FM1, ACARS) so as to transfer graphical interface control to the selected peripheral system,
**characterized in that**, other peripheral systems (ROPS, BTV) being connected to the user interface terminal (101A) via the control circuitry (CC), the control circuitry (CC) emulating a peripheral system behaviour and implementing the following steps:
- responding (803), to a naming request emanating from the user interface terminal, by a naming representative of a user interface terminal (101A) menu navigation action;
- when the user interface terminal (101A) performs (902) a transfer of graphical interface control from said user interface terminal (101A) to said control circuitry (CC), emulating (1003) another selection page, in the style of the selection page generated by the user interface terminal (101A), suitable for allowing the user to select a peripheral system out of said other peripheral systems (RPOS, BTV); and
- when said control circuitry (CC) detects (1004) a selection of a peripheral system out of said other peripheral systems (ROPS, BTV) through the transfer of graphical interface control, performing (1005) a transfer of graphical interface control from said user interface terminal (101A) to said selected peripheral system (ROPS, BTV), the control circuitry (CC) acting as a relay between said selected peripheral system (ROPS, BTV) and the user interface terminal (101A).

10. Computer program product, **characterized in that** it comprises instructions leading to the execution, by a port extension device (101B), of the method according to Claim 9, when said instructions are executed by a processor (610) of control circuitry (CC) of said port extension device (101B).

11. Storage medium, **characterized in that** it stores a computer program comprising constructions leading to the execution, by a port extension device (101B), of the method according to Claim 9, when said instructions are executed by a processor (610) of control circuitry (CC) of said port extension device (101B) .
